# EUROPEAN PATENT SPECIFICATION

(11) **EP 2 389 024 B1**
(45) Date of publication and mention of the grant of the patent: **02.04.2014**
(21) Application number: 10731045.0
(22) Date of filing: 13.01.2010
(51) Int. Cl.: H04W 48/14

(54) **COMMUNICATION SYSTEM, ACCESS CONTROL ENTITY AND METHOD FOR CONTROLLING ACCESS OF USER EQUIPMENT**
KOMMUNIKATIONSSYSTEM, ZUGANGSKONTROLLEINHEIT UND VERFAHREN ZUR KONTROLLE DES ZUGANGS ZU EINEM BENUTZERGERÄT
SYSTÈME DE COMMUNICATION, ENTITÉ DE CONTRÔLE D'ACCÈS ET PROCÉDÉ DE CONTRÔLE D'ACCÈS D'UN ÉQUIPEMENT D'UTILISATEUR

(30) Priority: 13.01.2009 CN 200910003638
(43) Date of publication of application: 23.11.2011
(73) Proprietor: Huawei Technologies Co., Ltd., Guangdong 518129 (CN)
(72) Inventor: HAN, Guanglin, Guangdong 518129 (CN); ZHANG, Peng, Guangdong 518129 (CN); ZHOU, Zheng, Guangdong 518129 (CN)
(74) Representative: Epping, Wilhelm
(86) International application number: PCT/CN2010/070145
(87) International publication number: WO 2010/081411

(56) References cited:
- WO-A1-2008/069520
- CN-A- 101 312 593
- US-A1- 2008 267 153
- ERICSSON: "Access Control of legacy and CSG UE in the same network", 3GPP DRAFT; R3-082907, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Vienna, Austria; 20081017, 17 October 2008 (2008-10-17), XP050325473, [retrieved on 2008-10-17]
- HUAWEI: "Discussion on Inbound Mobility from 3G Marco Cell to HNB", 3GPP DRAFT; R3-090802 DISCUSSION ON INBOUND MOBILITY FROM 3G MACRO CELL TO HNB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20080318, 18 March 2008 (2008-03-18), XP050341181, [retrieved on 2009-03-18]
- 3GPP: "3rd Generation Partnership Project;Technical Specification Group Radio Access Network;Home (e)NodeB;Network aspects(Release 8)", 3GPP DRAFT; R3.020_V090_WITH CHANGES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju Island, South Korea; 20080903, 3 September 2008 (2008-09-03), XP050323670, [retrieved on 2008-09-03]
- 'Technical Specification Group Radio Access Network; UTRAN architecture for 3 G Home NodeB; stage 2' 3GPP TS 25.467 V8.0.0. 3RD GENERATION PARTNERSHIP PROJECT 31 December 2008, XP050369091

## Description

### FIELD OF THE INVENTION

The present invention relates to communication technologies, and in particular, to a communication system, an access control entity, and a method for controlling User Equipment access.

### BACKGROUND OF THE INVENTION

In a UMTS (Universal Mobile Telecommunications System, Universal Mobile Telecommunications System) and a LTE(Long Term Evolution, Long Term Evolution network), before the UE (User Equipment, User Equipment) obtains the service provided by the communication network, the UE needs to get registered into the system through a registration process. The network, according to the information reported by the UE in the registration process, exercises access control for the UE, namely, judges whether the UE has the rights of getting registered onto the network.

In the existing network, mostly the access network, according to the release of the UE, determines which access control mode will be used, and determines the network elements on which the access control will be exercised. At present, the network, according to the release of the UE, judges whether the UE has the rights of getting registered onto the network in two modes. One mode is: The access network exercises access control on the UE of a specific old release, but the core network exercises no access control on this UE. For example, the access network uses an IMSI (International Mobile Subscriber Identifier Number, International Mobile Subscriber Identifier) to exercise access control on the UE that does not support a CSG (Closed Subscriber Group, Closed Subscriber Group). The other mode is: The core network exercises access control on a specific new UE, but the access network exercises no access control on this UE. For example, the core network exercises access control with CSG on the UE that supports the CSG

In the related art, the UE may access the core network directly without any access control on the UE, which impairs network security.

The article of "Access Control of legacy and CSG UE in the same network" (ERICSSON, 3GPP DRAFT; R3-082907) discloses a solution of access control of legacy and CSG UE in the same network.

The article of "Discussion on Inbound Mobility from 3G Marco Cell to HNB" (HUAWEI, 3GPP DRAFT; R3-090802) discloses a solution of a UE access control issue during relocation procedure.

### SUMMARY OF THE INVENTION

The embodiments of the present invention provide a communication system, according to claim 12, an access control entity according to claim 9 and a method according to claim 1 for controlling UE access to stick up for the security of the network.

To fulfill such objectives, embodiments of the present invention adopt the following technical solutions:
A method for controlling UE access provided in an embodiment of the present invention includes:
   determining, by an access network, an access control mode for a UE, which depends on access control exercised by a core network; and
   exercising access control on the UE when the core network is not capable of exercising access control on the UE in the access control mode.
An access control entity provided in an embodiment of the present invention includes:
   a first receiving module, configured to receive an access request from a UE which depends on access control exercised by a core network;
   a first judging module, configured to judge whether a core network capable of exercising access control can be selected for the UE; and
   a first access control module, configured to exercise access control on the UE if the first judging module determines that no core network capable of exercising access control can be selected for the UE.
A method for controlling UE access provided in an embodiment of the present invention includes:
   determining, by an access network, an access control mode for a UE; and
   sending a connection request to a core network to trigger the core network to exercise access control on the UE when the core network is capable of exercising access control on the UE in the access control mode.
An access control entity provided in an embodiment of the present invention includes:
   a second receiving module, configured to receive an access request from a UE which depends on access control exercised by a core network;
   a second judging module, configured to judge whether a core network capable of exercising access control can be selected for the UE; and
   a second connecting module, configured to send a connection request to the core network if the second judging module determines that the core network capable of exercising access control can be selected for the UE.
A communication system, comprising a user equipment, UE, an access network, and a first core network, wherein,
   the access network is configured to receive an access request from the UE which depends on access control exercised by a core network, and exercise access control on the UE if no core network capable of exercising access control can be selected for the UE.

Through the communication system, access control entity and the method for controlling UE access provided in embodiments of the present invention, the access control entity of the access network exercises access control on the UE which depends on access control exercised by the core network; or a core network capable of exercising access control on the UE is selected, and a connection request is sent to the core network to trigger the core network to exercise access control. The control on the sending of the connection request may prevent the UE connecting to the core network that does not exercise access control on the UE. In this way, before the UE accesses the core network, the UE undergoes access control exercised by the access network or core network for at least one time, which improves network security.

### BRIEF DESCRIPTION OF THE DRAWINGS

FIG. 1 is a flowchart of a method for controlling UE access in an embodiment of the present invention;
FIG 2 is a flowchart of a method for controlling UE access in an embodiment of the present invention;
FIG 3 is a flowchart of a method for controlling UE access in an embodiment of the present invention;
FIG 4 is a flowchart of a method for controlling UE access in an embodiment of the present invention;
FIG. 5 is a flowchart of a method for controlling UE access in an embodiment of the present invention;
FIG. 6 is a flowchart of a method for controlling UE access in an embodiment of the present invention;
FIG. 7 is a flowchart of a method for controlling UE access in an embodiment of the present invention;
FIG. 8 shows a structure diagram of a communication system provided in an embodiment of the present invention;
FIG. 9 shows a structure diagram of an access control entity provided in an embodiment of the present invention;
FIG. 10 shows a structure diagram of a communication system provided in an embodiment of the present invention; and
FIG 11 shows a structure diagram of an access control entity provided in an embodiment of the present invention.

### DETAILED DESCRIPTION OF THE EMBODIMENTS

A communication system, an access network, and a method for controlling UE access which are provided in an embodiment of the present invention are described as follows.
I. The existing access network exercises access control on the UE of a specific release. This method may be about IMSI-based access control. The access control entity (such as a base station and/or Gateway) of the access network stores the IMSIs of all UEs that can pass the access control. The UE sends the IMSI to the access control entity during the access request process. If the UE exists in the Allowed IMSI List (a combination of IMSIs stored on the access control entity for the purpose of access control), the access request from the UE is passed; otherwise, the access request from the UE is rejected.
II. AHNB is private, and is not available to external users without permission of the owner. From the perspective of the operator, the tariff of the HNB coverage is lower than the tariff of the macro network, and the operator expects to restrict the UE that uses the HNB. Therefore, the HNB needs to support access control. Before sending an access request, the UE needs to join a Closed Subscriber Group (CSG). The access control entity stores the CSGs of all the UEs that can pass the access control. The CSG of the current HNB cell is sent to the access control entity during the access request process. If the subscriber groups joined by the UE beforehand include the CSG of the current cell, access request from the UE is passed; otherwise, the access request from the UE is rejected. This access control mode emerges with the emergence of the CSG Generally, a function control entity (such as SGSN (Serving GPRS Support Node serving GPRS support Node)) on the core network exercises access control on a UE whose release supports a CSG

Currently, the access network exercises access control on a UE whose release doesn't support a CSG, but does not exercise access control on a UE whose release supports a CSG However, with emergence of the CSG, core networks fall into two types: The first type of core network does not exercise access control on the UE, and the second type exercises access control on a UE whose release supports a CSG As a result, the access network in the prior art can connect a UE whose release supports a CSG into the first type of core network without any access control, and the security of the communication network equipped with the first type of core network is challenged severely.

The embodiments of the present invention provide a communication system, an access network, and a method for controlling UE access to improve network security. The communication system, core network and the method for controlling UE access are described in detail with reference to accompanying drawings. In embodiments of the present invention, the UEs may also fall into two types. The first type of UEs depends on access control exercised by the access network; and the second type depends on access control exercised by the core network. Unless specified, the UEs in the following embodiments refer to the existing UEs which depend on access control exercised by the core network. Take a UE whose release supports a CSG as an example.

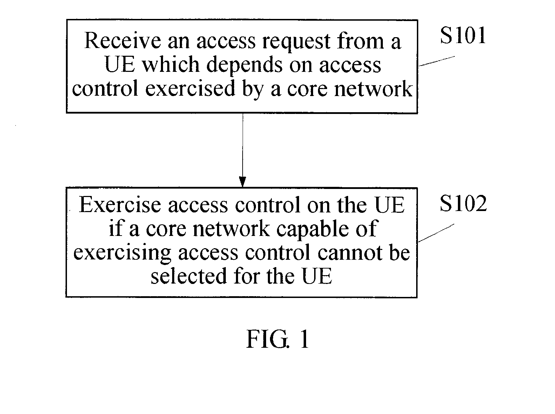

As shown in FIG 1, a method for controlling UE access in an embodiment of the present invention includes the following steps:
S101. Receive an access request from a UE which depends on access control exercised by a core network.
S102. Exercise access control on the UE if no core network capable of exercising access control can be selected for the UE, where the access control may be exercised according to the International Mobile Subscriber Identifier of the UE.

The access request may be a direct transmission message or a connection setup complete message, or an access request message.

After the UE passes the access control in S102, the UE sends a connection request of the UE to the core network, so as to connect the UE into the core network that does not exercise access control on the UE. The access control in S102 ensures that the UE undergoes access control before the UE accesses the core network, which improves network security.

When no core network capable of exercising access control can be selected for the UE in S102, the following scenarios are applicable, and the corresponding access control differs. The following expounds the method, provided in an embodiment of the present invention, of controlling UE access with reference to detailed application scenarios and accompanying drawings.

A communication system includes a UE, an access network, and a core network. For example, in the following embodiments, the function of access control in the core network is implemented by an SGSN. An access network may include a base station (HNB) and a gateway (HNB GW).

Scenario 1: Core network information (including information indicating whether access control can be exercised on the UE which depends on access control exercised by the core network) may be configured on the gateway. Therefore, after the access network receives an access request from a UE which depends on access control exercised by the core network, the gateway is incapable of selecting a core network that is capable of exercising access control on the UE according to the configured core network information, and then the gateway exercises access control on the UE.

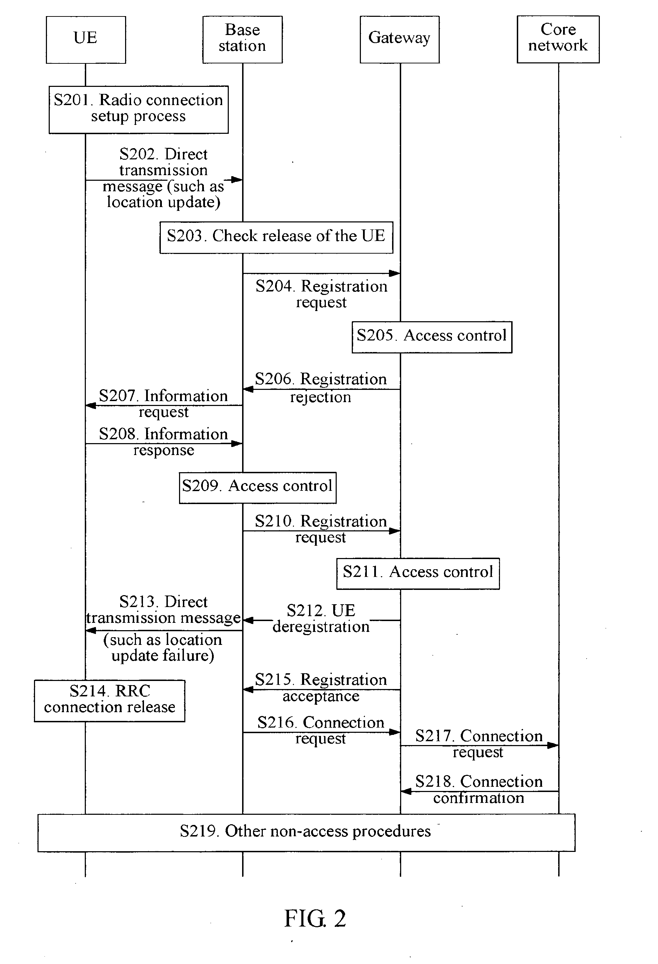

As shown in FIG 2, the following steps are included:
S201. Before communicating with the network, the UE needs to pass access control. The UE initially sets up a radio connection with the HNB. The access control process is well known to person skilled in the art, and is not repeated herein any more. The UE may notify the release information of the UE to the network.
S202. The UE sends the Protocol Data Unit destined for the SGSN to the HNB through a direct transmission message or a connection setup complete message. This message may carry an IDNNS (Intra-Domain NAS Node Selector, Intra-Domain NAS Node Selector) which the UE needs to initially access and a domain indicator, which facilitates the GW to determine the release of the core network to be accessed by the UE and to decide the method of admission control.
S203. According to the content of the message received in S202, the HNB checks the release of the UE, and knows that the access control mode is Allowed CSG List (Allowed Close Subscriber Group List, Allowed Close Subscriber Group List).
S204. Because the HNB does not exercise Allowed CSG List access control, the HNB sends a registration request to the HNB GW directly.
S205. The HNB GW, according to the release information of the UE, determines to select the SGSN that is capable of exercising Allowed CSG List access control for the UE. Because none of the SGSNs configured by the HNB GW is capable of exercising such type of access control, the HNB GW, optionally, exercises the access control on the UE, based on Allowed IMSI List ( Allowed International Mobile Subscriber Identity List, Allowed International Mobile Subscriber Identity List). If succeeds, the procedure proceeds to S215; if fails, the procedure proceeds to S206.
S206. If the access control fails, or the UE information (such as IMSI) is lacking, or the HNB GW does not exercise access control on this type of UE, the HNB GW returns a UE registration rejection message or error indication message to the HNB. The message may carry an indication of the mode for exercising access control on the UE. If the HNB needs to exercise access control, but the stored information (for example, for lack of IMSI) is deficient for access control, the procedure proceeds to S207.
S207. The HNB initiates a procedure of obtaining the UE information, and sends an information request to the UE.
S208. The UE returns the requested information (such as IMSI) to the HNB according to the requested content.
S209. The HNB obtains UE information, and optionally, exercises access control on the UE, based on Allowed IMSI List. If the access control fails, the procedure proceeds to step S213. If the HNB does not exercise access control or the access control succeeds, the procedure proceeds to S210.
S210. The HNB sends a registration request to the HNB GW.
S211. The HNB GW exercises Allowed IMSI List access control on the UE according to the obtained UE information (such as IMSI, release information). If the UE fails to access the HNB GW, the procedure proceeds to S212; if the access succeeds, the procedure proceeds to S215.
S212. The HNB GW initiates a UE deregistration process to the HNB.
S213. After receiving a deregistration message from the HNB GW, the HNB initiates an access failure process to the UE through an air interface.
S214. The radio connection resource of the air interface is released.
S215. The HNB GW returns a registration acceptance message to the HNB.
S216. The HNB sends a connection request to the HNB GW after receiving the registration acceptance message.
S217. The HNB GW continues to send a new connection request to the SGSN.
S218. The SGSN returns a connection confirmation message to the HNB GW, and the UE accesses the network successfully.
S219. Other non-access procedures are performed.

### Scenario 2:

Unlike the first scenario mentioned above, this scenario has core network information configured on the HNB. When the HNB, according to the configured core network information, learns that no core network capable of exercising access control can be selected for the UE, the HNB exercises access control on the UE directly.

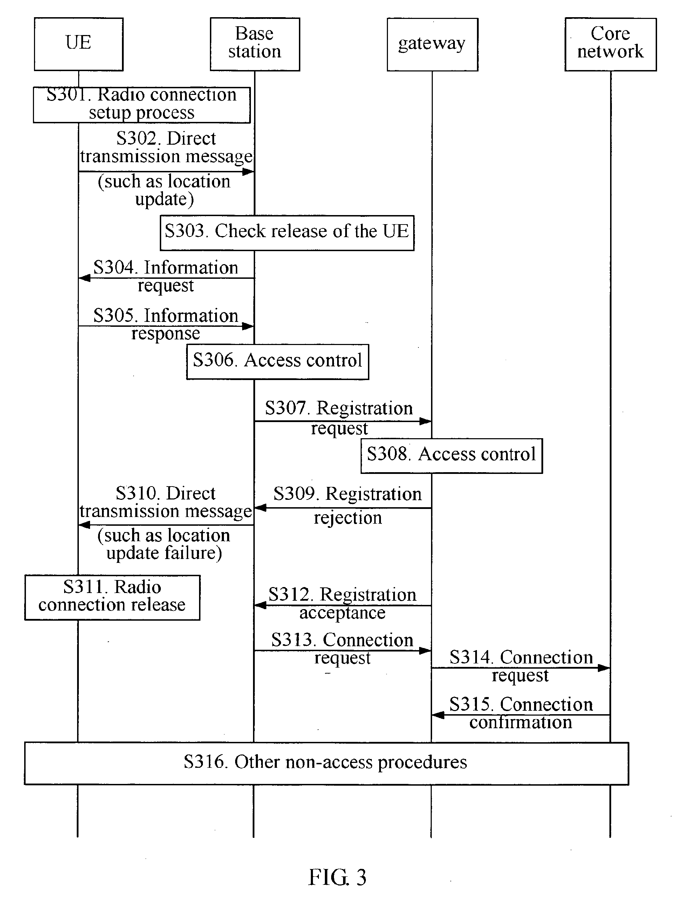

As shown in FIG 3, including the following steps:
S301. The UE sets up a radio connection with the HNB.
S302. The UE sends the PDU destined for the SGSN to the HNB through a direct transmission message or a connection setup complete message. This message may carry an IDNNS which the UE needs to initially access and may carry a domain indicator, which facilitates the GW to determine the release of the core network to be accessed by the UE and to decide the method of admission control.
S303. According to the content of the message received in S302, the HNB checks the release of the UE, and learns that the access control mode is Allowed CSG List.
S304. Because the HNB does not exercise access control based on the Allowed CSG List and the HNB has configured the release information of the core network, the HNB, optionally, exercises access control, based on Allowed IMSI List, on the UE if the core network corresponding to the HNB does not support the access control based on the Allowed CSG List. If the access control information is deficient (for example, for lack of IMSI), the HNB sends an information request message to the UE, or rejects the access request directly, and the procedure proceeds to S310.
S305. The UE returns the requested information (such as IMSI) to the HNB according to the requested content.
S306. The HNB obtains UE information, and optionally, exercises access control on the UE, based on Allowed IMSI List. If the access control fails, the procedure proceeds to step S310.
S307. If the HNB does not exercise access control or the access control succeeds, the HNB sends a registration request to the HNB GW.
S308. The HNB GW exercises access control, based on Allowed IMSI List, on the UE according to the obtained UE information (such as: IMSI, release information). If the UE fails to access the HNB GW, the procedure proceeds to S309; if the access succeeds, the procedure proceeds to S312.
S309. The HNB GW initiates a UE deregistration process to the HNB.
S310. After receiving a deregistration message from the HNB GW, the HNB initiates an access failure process to the UE through an air interface.
S311. The radio connection resource of the air interface is released.
S312. If the access control in S308 succeeds, the HNB GW returns a registration acceptance message to the HNB.
S313. The HNB sends a connection request to the HNB GW after receiving the registration acceptance message.
S314. The HNB GW continues to send a connection request to the SGSN again.
S315. The SGSN returns a connection confirmation message to the HNB GW, and the UE accesses the network successfully.
S316. Other non-access procedures are performed.

In this scenario, the base station configured to receive an access request from the UE which depends on access control exercised by the core network, and exercises access control on the UE after learning that the available core network does not exercise access control on the UE. After the UE passes the access control exercised by the base station, the gateway sends a connection request to the core network, so as to make the UE access the core network. The connection request does not carry information that cannot be identified by the core network.

### Scenario 3:

The access network does not configure the core network information (the information includes whether access control can be exercised on the UE), but the core network can set the access policy and analyze, according to the policy, the connection request, sent by the access network, of the UE which depends on access control exercised by the core network, and delivers an access failure message to the access network according to the connection request, and the access network, according to the access failure message, determines that the core network is incapable of exercising access control on the UE. That is, access policies are set on the core network, and the core network notifies the access network to exercise access control on the UE (the access policies are not equivalent to access control. The core network is incapable of exercising access control on the UE, but can simply analyze the message reported by the access network).

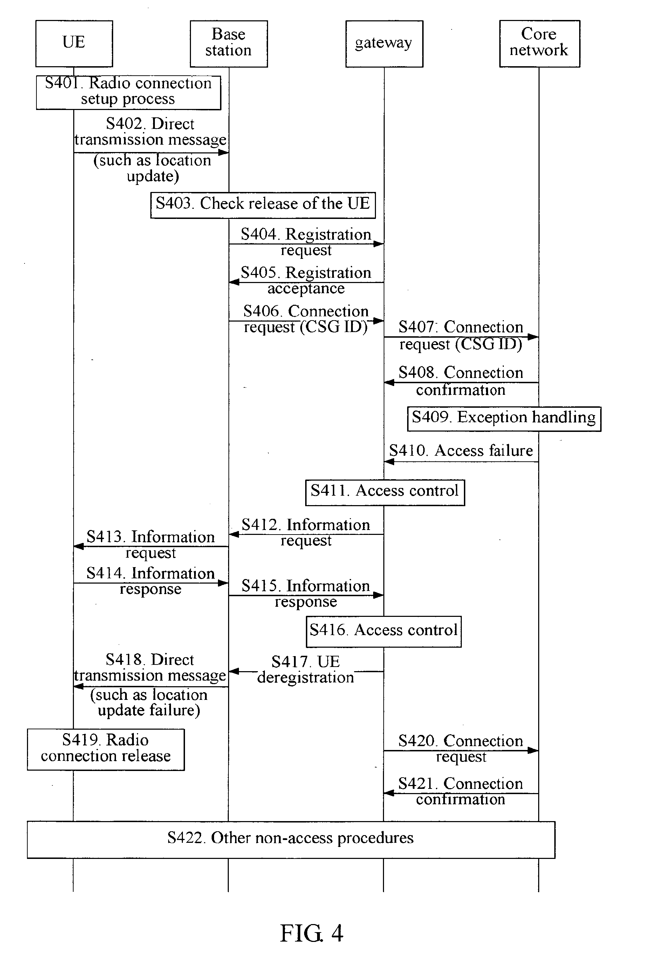

As shown in FIG 4, the following steps are included:
S401. The UE sets up a radio connection with the HNB.
S402. The UE sends the PDU destined for the SGSN to the HNB through a direct transmission message or a connection setup complete message. This message may carry an IDNNS which the UE needs to initially access, and a domain indicator, which facilitates the GW to determine the release of the core network to be accessed by the UE and to decide the method of admission control.
S403. According to the content of the message received in S402, the HNB checks the release of the UE, and knows that the access control mode is Allowed CSG List.
S404. Because the HNB does not exercise Allowed CSG List access control, the HNB sends a registration request to the HNB GW directly.
S405. The HNB GW sends a context identifier, which is allocated to the UE, to the HNB through a registration acceptance message.
S406. The HNB sends a connection message that carries a CSG ID to the HNB GW.
S407. Because the HNB GW does not exercise Allowed CSG List access control, the HNB GW sends a connection request to the SGSN. The request message carries the CSG ID of the cell accessed by the UE.
S408. The SGSN returns a connection confirmation message to the HNB GW.
S409. A policy is set on the SGSN: If the SGSN of this release does not support the CSG-based access control, or is incapable of identifying the information element (IE) of the CSG ID in the message, the SGSN initiates an exceptional handling process. As a result, the SGSN sends an exceptional handling process, and rejects the access of the UE.
S410. The SGSN returns an access failure message to the HNB GW. The message carries the failure cause (no support of CSG-based access control, or incapability of identifying the information element). Optionally, the message carries the identifier and content of the IE causing the failure. According to the exception information, the HNB GW learns that the SGSN does not support the access control mode based on Allowed CSG List.
S411. Optionally, the HNB GW exercises access control, based on Allowed IMSI List, on the UE, and the procedure proceeds to S412. If the HNB GW exercises access control on the UE, the procedure proceeds to S417.
S412. If the HNB GW needs to exercise access control, and the stored information (for example, for lack of IMSI) is deficient for access control, the HNB GW initiates a procedure of obtaining the UE information, and sends an information request to the HNB.
S413. The HNB receives the information request from the HNB GW, and sends an information request to the UE according to the content requested.
S414. The UE returns the requested information (such as IMSI) to the HNB according to the requested content.
S415. The HNB sends the obtained UE information to the HNB GW.
S416. The HNB GW exercises access control, based on Allowed IMSI List, on the UE according to the obtained UE information (such as IMSI). If the UE fails to access the HNB GW, the procedure proceeds to S417; if the access control succeeds, the procedure proceeds to S420.
S417. The HNB GW initiates a UE deregistration process to the HNB.
S418. After receiving a deregistration message from the HNB GW, the HNB initiates an access failure process to the UE through an air interface.
S419. The radio connection resource of the air interface is released.
S420. If the access control in S416 succeeds, and the connection of the UE between the HNB GW and the SGSN is released, the HNB GW sends a new connection request to the SGSN. The new connection request does not carry information that cannot be identified by the core network (such as CSG ID).
S421. If the connection between the HNB GW and the SGSN is set up again, the SGSN returns a connection confirmation message to the HNB GW.
S422. Other non-access procedures are performed.

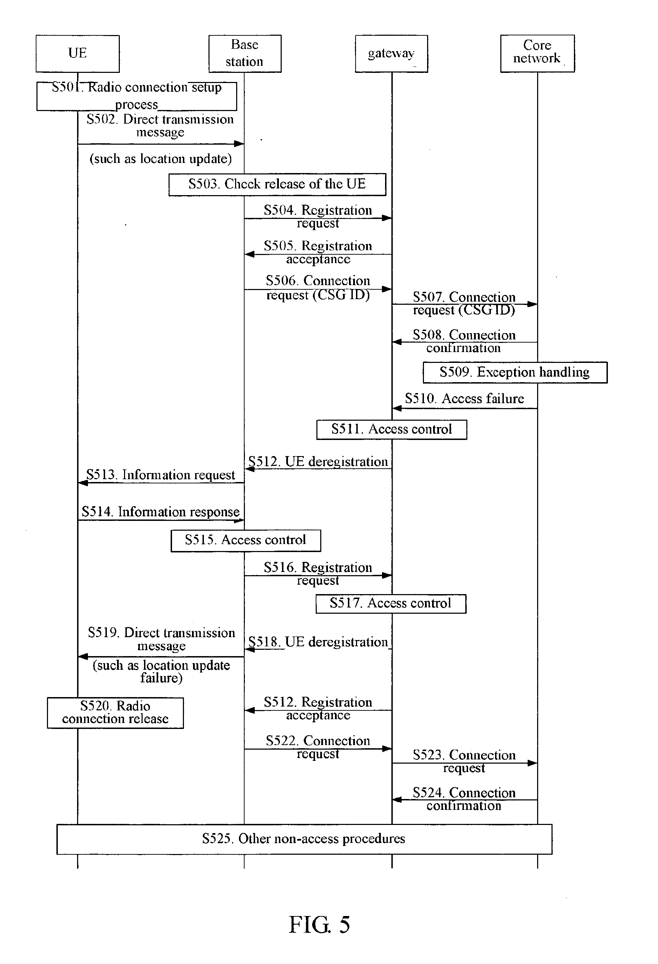

In FIG 4, through S412, the HNB GW starts a procedure of obtaining information based on local access control. This procedure may also be started by the HNB. As shown in FIG 5, the following steps are included:
S501-S511 are the same as S401-S411, and are not repeated any more.
S512. If the UE information required for access control is deficient (for example, for lack of IMSI), or the access control is not implemented, the HNB GW sends a UE deregistration message to the HNB directly. This message may carry an indication of the mode for exercising access control on the UE.
S513. If the HNB needs to exercise access control, and the stored information (for example, for lack of IMSI) is deficient for access control, the HNB initiates a procedure of obtaining the UE information, and sends an information request to the UE. If the HNB does not exercise access control or the access control succeeds, the procedure proceeds to S516.
S514. The UE returns the requested information (such as IMSI) to the HNB according to the content requested.
S515. The HNB obtains UE information, and optionally, exercises access control on the UE, based on Allowed IMSI List. If the access control fails, the procedure proceeds to S519.
S516. The HNB sends a registration request to the HNB GW.
S517. The HNB GW exercises Allowed IMSI List access control on the UE according to the obtained UE information (such as: IMSI, release information). If the UE fails to access the HNB GW, the procedure proceeds to S518; if the access succeeds, the procedure proceeds to S512.
S518. The HNB GW initiates a UE deregistration process to the HNB.
S519. After receiving a deregistration message from the HNB GW, the HNB initiates an access failure process to the UE through an air interface.
S520. The radio connection resource of the air interface is released.
S521. If the access control in S517 succeeds, the HNB GW returns a registration acceptance message to the HNB.
S522. The HNB sends a connection request to the HNB GW after receiving the registration acceptance message.
S523. The HNB GW continues to send a new connection request to the SGSN.
S524. The SGSN returns a connection confirmation message to the GW, and the UE accesses the network successfully.
S525. Other non-access procedures are performed.

In the scenario shown in FIG 4 and FIG 5, if no core network capable of exercising access control can be selected for the UE, the access control is exercised on the UE as follows:
The access network selects a core network, and sends a connection request to the core network, where the connection request carries information that cannot be identified by the core network;
The access network receives an access failure message returned by the core network for failure of identifying the information;
The access network, according to the access failure message, determines that the core network is incapable of exercising access control on the UE; and
The access network exercises access control on the UE.

In the above mentioned embodiments, after the UE passes the access control exercised by the access network, the access network sends a connection request to the core network incapable of exercising access control on the UE, where the sent connection request does not carry information that cannot identified by the core network.

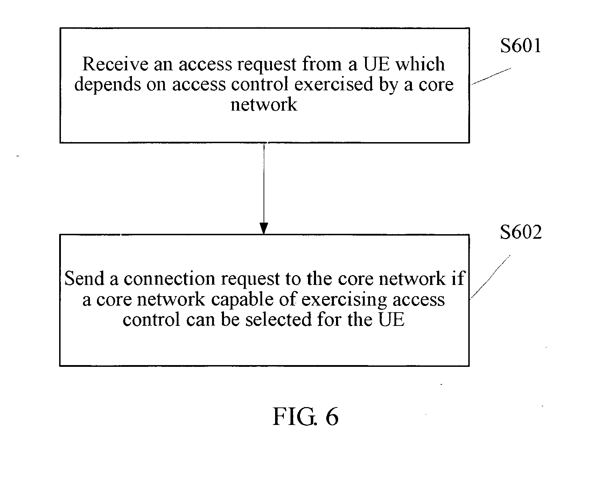

As shown in FIG 6, another method for controlling UE access in an embodiment of the present invention includes the following steps:
S601. Receive an access request from a UE which depends on access control exercised by a core network.
S602. Send a connection request to the core network if a core network capable of exercising access control can be selected for the UE.

The access request may be a direct transmission message or a connection setup complete message, or an access request message.

In this embodiment, a core network capable of exercising access control on the UE is selected, and a connection request is sent to the core network to trigger the core network to exercise access control. The control on the sending of the connection request, so as to prevent the UE connecting to the core network that does not exercise access control on the UE. In this way, before the UE accesses the core network, the UE undergoes access control exercised by the core network, which improves network security.

The following expounds this embodiment in detail with reference to a specific application scenario.

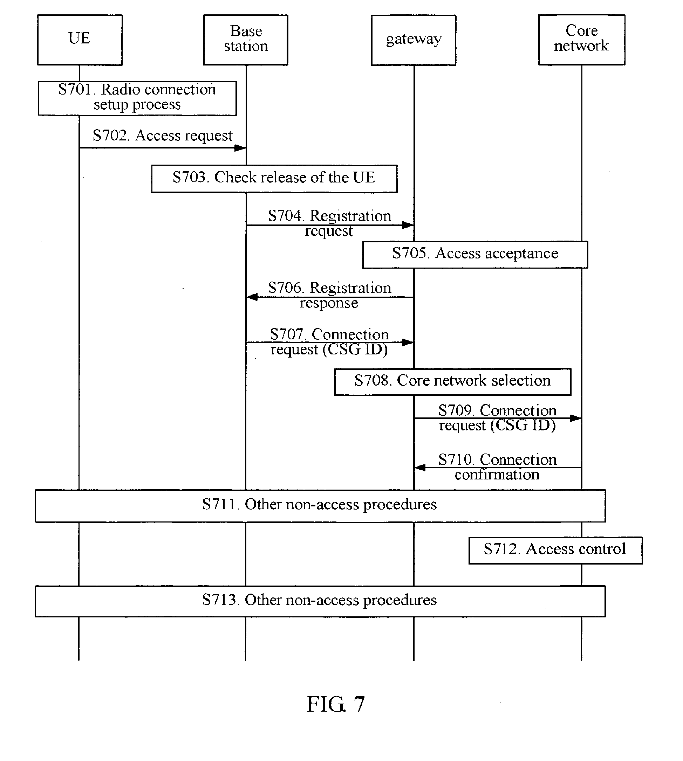

As shown in FIG 7, the following steps are included:
S701. The UE sets up a RRC connection with the HNB, and reports information such as ID (temporary ID or IMSI), release of the UE.
S702. Through the radio connection, the UE sends an access request message to the HNB. The message may carry an IDNNS which the UE needs to initially access and a domain indicator, which facilitates the GW to determine the release of the core network to be accessed by the UE and to decide the method of admission control.
S703. The HNB determines Allowed CSG List as the access control mode according to the UE information, and does not exercise access control on the UE.
S704. The HNB sends a UE registration message (the message may carry IMSI, UE Rel, UE Cap) to the HNB GW.
S705. According to the UE information, the HNB GW determines that the access control mode is the mode of Allowed CSG List. The HNB GW does not exercise access control on the UE, but always allows the UE to access.
S706. The HNB GW returns a UE registration acceptance message to the HNB.
S707. After receiving the acceptance message, the HNB sends a connection message to the HNB GW. The connection message carries a CSG ID of the cell accessed by the UE.
S708. The HNB GW, according to the relevant SGSN configuration information, selects an SGSN capable of exercising access control, based on Allowed CSG List, on the current UE.
S709. The HNB GW sends a connection request message to the core network. The connection request message carries a CSG ID of the cell accessed by the UE.
S710. The node of the core network returns a connection confirmation message to the HNB GW.
S711. Optionally, other mobile management signal procedures continue.
S712. The node of the core network exercises access control on the UE according to the CSG ID received in S708.
S713. The NAS signaling procedure continues.

In the foregoing embodiments, the access network includes a base station and a gateway. It is the base station or the gateway that exercises access control on the UE; or, after the base station exercises access control on the UE for a first time, the gateway exercises access control on the UE for a second time. Alternatively, the gateway sends an instruction to the base station to exercise access control on the UE, where the instruction carries an access control mode. For example, the gateway instructs the base station to exercise access control on the UE in the process of registering the base station. The procedure includes the following steps (not illustrated):
Step 1: The gateway receives a registration request from the base station.
Step 2: The gateway returns a registration acceptance message to the base station. The registration acceptance message carries the access control mode for the UE which depends on access control exercised by the core network.

A communication system and an access control entity are provided in an embodiment of the present invention.

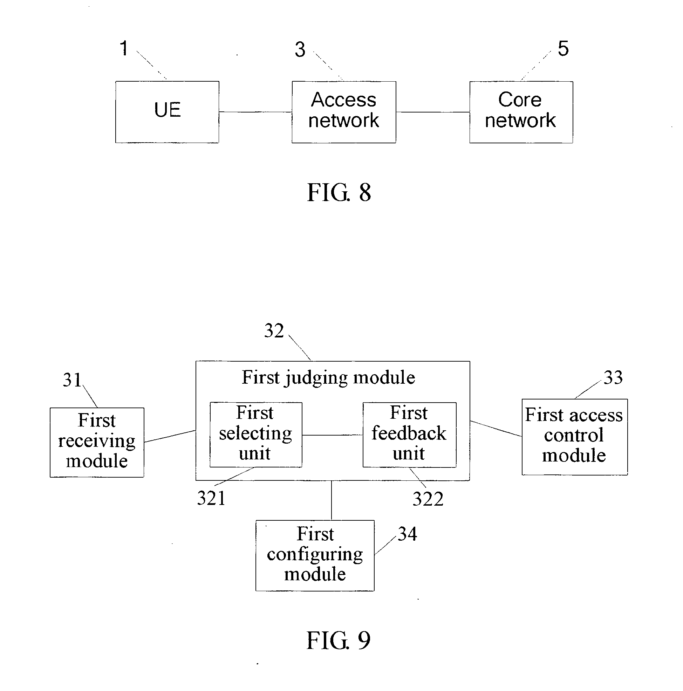

As shown in FIG 8, the communication system includes a UE1, an access network 3, and a core network 5.

The access network 3 is configured to receive an access request from the UE1 which depends on access control exercised by the core network 5, and exercise access control on the UE1 if a core network 5 capable of exercising access control cannot be selected for the UE1. After the US1 passes the access control exercised by the access network 3, the access network 3 sends a connection request to the core network 5.

In this system, the core network 5 may be further configured to: set an access policy for the UE1 which depends on access control exercised by the core network 5; judge, according to the access policy, whether an access request carries information that cannot be locally identified when receiving the connection request sent by the access network 3; and if the access request carries information that cannot be identified, return an access failure message to the access network 3, where the access network 3, according to the access failure message, learns that the core network 5 capable of exercising access control on the UE1 cannot be selected and the access network 3 exercises access control on the UE1. After the UE1 passes the access control exercised by the access network 3, the access network 3 sends a connection request to the core network 5, where the connection request does not carry information that cannot be identified by the core network.

As shown in FIG 9, an access control entity is provided. The access control entity may be a base station or a gateway in the access network. The access control entity includes:
a first receiving module 31, configured to receive an access request from a UE which depends on access control exercised by a core network;
a first judging module 32, configured to judge whether a core network capable of exercising access control can be selected for the UE; and
a first access control module 33, configured to exercise access control on the UE if the first judging module 32 determines that no core network capable of exercising access control can be selected for the UE.

The network control entity may further include:
a first configuring module 34, configured to configure core network information as a basis for the first judging module 32 to judge whether a core network capable of exercising access control can be selected for the UE.

The first judging module 32 is further configured to determine, according to the access failure message of the core network, that no core network capable of exercising access control can be selected for the UE. The first judging module 32 further includes:
a first selecting unit 321, configured to: select a core network that does not require access control for the UE if the first judging module 32 cannot select a core network capable of exercising access control for the UE, and send a connection request to the core network, where the connection request carries information that cannot be identified by the core network.
a first feedback unit 322, configured to receive an access failure message fed back by the core network selected by the first selecting unit 321, and instruct the first access control unit 33 to exercise access control on the UE.

Corresponding to the method embodiment, the access control entity may be a base station or a gateway. The base station is further configured to send its own registration request to the gateway. After receiving the registration request sent by the base station, the gateway may return a registration acceptance message to the base station, where the registration acceptance message indicates the mode of access control exercised by the base station for the UE (including the UE which depends on access control exercised by the core network). In this way, the base station may correspondingly process the UE which depends on access control exercised by the core network according to the access control mode indicated by the gateway. The processing procedure is similar to the scenario illustrated in FIG 2, and is not described in detail herein. The procedure may reduce messages to be forwarded, and transmit messages transparently in the process of access control, exercised by the access network, on the UE.

With the communication system and access control entity in this embodiment, the access control entity such as a base station or gateway on the access network 3 exercises access control on the UE1 which depends on access control of the core network 5, so as to improve network security.

A communication system and an access control entity are provided in another embodiment of the present invention.

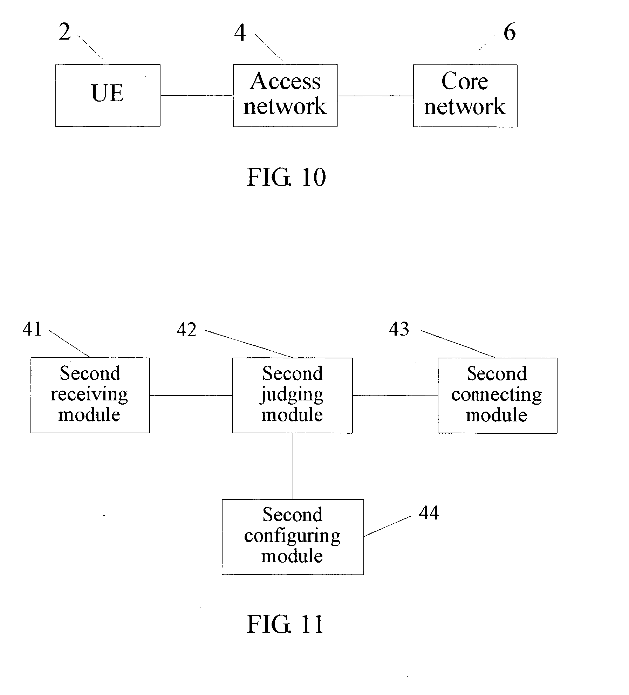

As shown in FIG 10, the system includes a UE2, an access network 4, and a core network 6.

The access network 4 is configured to receive an access request from the UE2 which depends on access control exercised by the core network 6, and send a connection request to the core network 6 if a core network 6 capable of exercising access control can be selected for the UE2.

Corresponding to the system, the access control entity of the access network may be a gateway. As shown in FIG 11, the access control entity includes:
a second receiving module 41, configured to receive an access request from a UE which depends on access control exercised by a core network;
a second judging module 42, configured to judge whether a core network capable of exercising access control can be selected for the UE; and
a second connecting module 43, configured to send a connection request to the core network if the second judging module 42 determines that the core network capable of exercising access control can be selected for the UE.

The second configuring module 44 is configured to configure core network information which indicates capability of exercising access control on the UE and serves as a basis for the second judging module 42 to judge whether a core network capable of exercising access control can be selected for the UE.

With the communication system and the access control entity provided in this embodiment, a core network 6 capable of exercising access control on the UE2 is selected, and a connection request is sent to the core network 6 to trigger the core network 6 to exercise access control. The control on the sending of the connection request, so as to prevent the UE2 connecting to the core network 6 that does not exercise access control on the UE2. In this way, before the UE2 accesses the core network, the UE2 undergoes access control exercised by the core network, which improves network security.

Persons of ordinary skill in the art should understand that all or part of the steps of the method provided in the embodiments above may be implemented by a program instructing relevant hardware. The program may be stored in computer readable storage media. When the program runs, the program executes the steps of the method specified in any embodiment above. The storage media may be a magnetic disk, CD-ROM, Read-Only Memory (ROM), or Random Access Memory (RAM).

The above descriptions are merely exemplary embodiments of the present invention, but not intended to limit the protection scope of the present invention. Any modifications, variations or replacement that can be easily derived by those skilled in the art shall fall within the protection scope of the present invention. Therefore, the protection scope of the present invention is subject to the appended claims.

## Claims

1. A method for controlling User Equipment, UE, access, comprising:
determining, by an access network, an access control mode for a UE, which depends on access control exercised by a core network; and, **characterized by**,
exercising, by the access network, access control on the UE when the core network is incapable of exercising access control on the UE in the access control mode.

2. The method according to claim 1, wherein: the access control mode for the UE is an Allowed Closed Subscriber Group List, Allowed CSG List, mode;
the exercising access control on the UE when the core network is incapable of exercising access control on the UE in the access control mode comprises:
exercising, by the access network, access control on the UE in an Allowed International Mobile Subscriber Identifier List, Allowed IMSI List, mode when the access network determines that the core network is incapable of exercising access control on the UE in the Allowed CSG List mode.

3. The method according to claim 2, wherein: core network information is configured on a gateway of the access network, or is configured on a base station of the access network; the core network information comprises information indicating whether access control can be exercised on the UE which depends on access control exercised by the core network;
the determining the core network is incapable of exercising access control on the UE in the Allowed CSG List mode comprises:
determining, by the gateway of the access network, that the core network is incapable of exercising access control on the UE in the Allowed CSG List mode according to the core network information configured on the gateway;
or comprises:
determining, by the base station of the access network, that the core network is incapable of exercising access control on the UE in the Allowed CSG List mode according to the core network information configured on the base station.

4. The method according to claim 1, wherein: the determining the core network is incapable of exercising access control on the UE in the access control mode comprises:
sending, by a gateway of the access network, a connection request to the core network, wherein the connection request carries a CSG ID of a cell accessed by the UE;
receiving an access failure message from the core network;
determining that the core network is incapable of exercising access control on the UE in the access control mode according to the access failure message.

5. The method according to any one of claims 1 to 4, wherein: the determining, by an access network, an access control mode for the UE comprises:
receiving, by a gateway of the access network, a registration request, wherein the registration request is sent by a base station after the base station receives an access request from the UE; and
learning, by the gateway according to the registration request, that the UE depends on access control exercised by the core network, and determining an access control mode for the UE;
or comprising:
receiving, by a base station of the access network, an access request from the UE; and
learning, by the base station, that the UE depends on access control exercised by the core network, and determining an access control mode for the UE, according to the access request from the UE.

6. The method according to claim 1, wherein: the exercising access control on the UE comprises:
exercising, by the access network, access control on the UE according to an International Mobile Subscriber Identifier of the UE.

7. The method according to claim 1, wherein:
exercising, by a gateway of the access network, access control on the UE; and
after the exercising, by a gateway of the access network, access control on the UE, the method further comprises:
sending, by the gateway, a message to a base station of the access network, the message includes an indication of a mode for exercising access control on the UE, when the gateway exercises the access control on the UE unsuccessfully.

8. The method according to claim 7, wherein, after the sending the message to the base station of the access network, the method further comprises:
receiving, by the gateway, a registration request returned by the base station, wherein the registration request carries an International Mobile Subscriber Identifier of the UE and is sent after the base station exercises access control successfully or the base station exercises no access control;
obtaining, by the gateway, the International Mobile Subscriber Identifier; and
exercising, by the gateway, access control on the UE according to the International Mobile Subscriber Identifier.

9. An access control entity, comprising:
a first receiving module (31), configured to receive an access request from a User Equipment, UE, which depends on access control exercised by a core network; and, **characterized by**,
a first judging module (32), configured to judge whether any core network capable of exercising access control can be selected for the UE; and
a first access control module (33), configured to exercise access control on the UE if the first judging module (32) determines that no core network capable of exercising access control can be selected for the UE.

10. The access control entity according to claim 9, further comprising:
a first configuring module (34), configured to configure core network information as a basis for the first judging module (32) to judge whether any core network capable of exercising access control can be selected for the UE.

11. The access control entity according to claim 9 or 10, wherein the first judging module (32) further comprises:
a first selecting unit (321), configured to: select a core network that does not require access control for the UE if the first judging module (32) determines that no core network capable of exercising access control can be selected for the UE, and send a connection request to the core network, wherein the connection request carries information that cannot be identified by the core network; and
a first feedback unit (322), configured to receive an access failure message fed back by the core network selected by the first selecting unit (321), and instruct the first access control module (33) to exercise access control on the UE.

12. A communication system, comprising a user equipment, UE, an access network, and a first core network, **characterized by**,
the access network being configured to receive an access request from the UE which depends on access control exercised by a core network, and exercising access control on the UE if no core network capable of exercising access control can be selected for the UE.

13. The communication system according to claim 12, wherein, the access network is further configured to send a connection request to the first core network after the UE passes the access control exercised by the access network.

14. The communication system according to claim 13,
the first core network is configured to set an access policy for the UE which depends on access control exercised by the core network, and judge, according to the access policy, whether an access request carries information that cannot be locally identified when receiving the connection request sent by the access network, and if the access request carries information that cannot be identified, return an access failure message to the access network;
wherein, the connection request does not carry the information that cannot be identified by the core network.

## Patentansprüche

1. Verfahren zum Steuern des Zugangs einer Benutzerausrüstung, UE, umfassend:
Bestimmen, durch ein Zugangsnetzwerk, eines Zugangssteuerungsmodus für eine UE, die von der durch ein Kernnetzwerk ausgeübten Zugangssteuerung abhängig ist, und **gekennzeichnet durch**:
Ausüben, **durch** das Zugangsnetzwerk, von Zugangssteuerung an der UE, wenn das Kernnetzwerk nicht in der Lage ist, Zugangssteuerung an der UE in dem Zugangssteuerungsmodus auszuüben.

2. Verfahren nach Anspruch 1, wobei: der Zugangssteuerungsmodus für die UE ein Modus einer zugelassenen geschlossenen Teilnehmergruppenliste bzw. einer zugelassenen CSG-Liste ist;
das Ausüben von Zugangssteuerung an der UE, wenn das Kernnetzwerk nicht in der Lage ist, Zugangssteuerung an der UE in dem Zugangssteuerungsmodus auszuüben, umfasst:
Ausüben, durch das Zugangsnetzwerk, von Zugangssteuerung an der UE in einem Modus einer zugelassenen internationalen Mobilteilnehmerkennung-Liste bzw. einer zugelassenen IMSI-Liste, wenn das Zugangsnetzwerk bestimmt, dass das Kernnetzwerk nicht in der Lage ist, Zugangssteuerung an der UE in dem Modus der zugelassenen CSG-Liste auszuüben.

3. Verfahren nach Anspruch 2, wobei: Kernnetzwerk-Informationen an einem Gateway des Zugangsnetzwerks konfiguriert werden oder an einer Basisstation des Zugangsnetzwerks konfiguriert werden; die Kernnetzwerk-Informationen Informationen umfasst, die angeben, ob Zugangssteuerung an der UE ausgeübt werden kann, was von Zugangssteuerung abhängig ist, die von dem Kernnetzwerk ausgeübt wird;
die Bestimmung, dass das Kernnetzwerk nicht in der Lage ist, Zugangssteuerung an der UE in dem Modus der zugelassenen CSG-Liste auszuüben, umfasst:
Bestimmen, durch den Gateway des Zugangsnetzwerks, dass das Kernnetzwerk nicht in der Lage ist, Zugangssteuerung an der UE in dem Modus der zugelassenen CSG-Liste auszuüben, gemäß den an dem Gateway konfigurierten Kernnetzwerk-Informationen;
oder umfasst:
Bestimmen, durch die Basisstation des Zugangsnetzwerks, dass das Kernnetzwerk nicht in der Lage ist, Zugangssteuerung an der UE in dem Modus der zugelassenen CSG-Liste auszuüben, gemäß den an der Basisstation konfigurierten Kernnetzwerk-Informationen.

4. Verfahren nach Anspruch 1, wobei: die Bestimmung, dass das Kernnetzwerk nicht in der Lage ist, Zugangssteuerung an der UE in dem Zugangssteuerungsmodus auszuüben, umfasst:
Senden, durch einen Gateway des Zugangsnetzwerks, einer Verbindungsanforderung zu dem Kernnetzwerk, wobei die Verbindungsanforderung eine CSG-ID einer Zelle, auf die durch die UE zugegriffen wird, trägt;
Empfangen einer Zugangsfehlschlag-Nachricht von dem Kernnetzwerk;
Bestimmen, dass das Kernnetzwerk nicht in der Lage ist, Zugangssteuerung an der UE in dem Zugangssteuerungsmodus auszuüben, gemäß der Zugangsfehlschlag-Nachricht.

5. Verfahren nach einem der Ansprüche 1 bis 4, wobei: die Bestimmung, durch ein Zugangsnetzwerk, eines Zugangssteuerungsmodus für die UE umfasst:
Empfangen, durch einen Gateway des Zugangsnetzwerks, einer Registrationsanforderung, wobei die Registrationsanforderung durch eine Basisstation gesendet wird, nachdem die Basisstation eine Zugangsanforderung von der UE empfängt; und
Erfahren, durch den Gateway gemäß der Registrationsanforderung, dass die UE von durch das Kernnetzwerk ausgeübter Zugangssteuerung abhängig ist, und Bestimmen eines Zugangssteuerungsmodus für die UE;
oder umfassend:
Empfangen, durch die Basisstation des Zugangsnetzwerks, einer Zugangsanforderung von der UE; und
Erfahren, durch die Basisstation, dass die UE von durch das Kernnetzwerk ausgeübter Zugangssteuerung abhängig ist, und Bestimmen eines Zugangssteuerungsmodus für die UE gemäß der Zugangsanforderung von der UE.

6. Verfahren nach Anspruch 1, wobei: das Ausüben von Zugangssteuerung an der UE umfasst:
Ausüben, durch das Zugangsnetzwerk, von Zugangssteuerung an der UE gemäß einer internationalen Mobilteilnehmerkennung der UE.

7. Verfahren nach Anspruch 1, wobei:
Ausüben, durch einen Gateway des Zugangsnetzwerks, von Zugangssteuerung an der UE; und
nach dem Ausüben, durch einen Gateway des Zugangsnetzwerks, von Zugangssteuerung an der UE das Verfahren ferner umfasst:
Senden, durch den Gateway, einer Nachricht zu einer Basisstation des Zugangsnetzwerks, wobei die Nachricht eine Angabe eines Modus zum Ausüben von Zugangssteuerung an der UE enthält, wenn der Gateway die Zugangssteuerung an der UE erfolglos ausübt.

8. Verfahren nach Anspruch 7, wobei das Verfahren nach dem Senden der Nachricht zu der Basisstation des Zugangsnetzwerks ferner umfasst:
Empfangen, durch den Gateway, einer durch die Basisstation zurückgesandten Registrationsanforderung, wobei die Registrationsanforderung eine internationale Mobilteilnehmerkennung der UE trägt und gesendet wird, nachdem die Basisstation erfolgreich Zugangssteuerung ausübt oder die Basisstation keine Zugangssteuerung ausübt;
Erhalten, durch den Gateway, der internationalen Mobilteilnehmerkennung; und
Ausüben, durch den Gateway, von Zugangssteuerung an der UE gemäß der internationalen Mobilteilnehmerkennung.

9. Zugangssteuerungsentität, umfassend:
ein erstes Empfangsmodul (31), konfiguriert zum Empfangen einer Zugangsanforderung von einer Benutzerausrüstung, UE, die von der durch ein Kernnetzwerk ausgeübten Zugangssteuerung abhängig ist; und **gekennzeichnet durch**:
ein erstes Beurteilungsmodul (32), konfiguriert zum Beurteilen, ob ein Kernnetzwerk, das zum Ausüben von Zugangssteuerung in der Lage ist, für die UE ausgewählt werden kann; und
ein erstes Zugangssteuerungsmodul (33), konfiguriert zum Ausüben von Zugangssteuerung an der UE, wenn das erste Beurteilungsmodul (32) bestimmt, dass kein Kernnetzwerk, das in der Lage ist, Zugangssteuerung auszuüben für die UE ausgewählt werden kann.

10. Zugangssteuerungsentität nach Anspruch 9, ferner umfassend:
ein erstes Konfigurationsmodul (34), konfiguriert zum Konfigurieren von Kernnetzwerk-Informationen als eine Grundlage für das erste Beurteilungsmodul (32) zum Beurteilen, ob ein Kernnetzwerk, das in der Lage ist, Zugangssteuerung auszuüben, für die UE ausgewählt werden kann.

11. Zugangssteuerungsentität nach Anspruch 9 oder 10, wobei das erste Beurteilungsmodul (32) ferner umfasst:
eine erste Auswahleinheit (321), konfiguriert zum: Auswählen eines Kernnetzwerks, das keine Zugangssteuerung für die UE erfordert, wenn das erste Beurteilungsmodul (32) bestimmt, dass kein Kernnetzwerk, das in der Lage ist, Zugangssteuerung auszuüben, für die UE ausgewählt werden kann, und Senden einer Verbindungsanforderung zu dem Kernnetzwerk, wobei die Verbindungsanforderung Informationen trägt, die durch das Kernnetzwerk nicht identifiziert werden können;
und
eine erste Rückmeldungseinheit (322), konfiguriert zum Empfangen einer Zugangsfehlschlag-Nachricht, die von dem durch die erste Auswahleinheit (321) ausgewählten Kernnetzwerk zurückgemeldet wird, und Anweisen des ersten Zugangssteuerungsmoduls (33) zum Ausüben von Zugangssteuerung an der UE.

12. Kommunikationssystem, umfassend eine Benutzerausrüstung, UE, ein Zugangsnetzwerk und ein erstes Kernnetzwerk, **dadurch gekennzeichnet, dass** das Zugangsnetzwerk konfiguriert ist zum Empfangen einer Zugangsanforderung von der UE, die von durch ein Kernnetzwerk ausgeübter Zugangssteuerung abhängig ist, und Ausüben von Zugangssteuerung an der UE, wenn kein Kernnetzwerk, das in der Lage ist, Zugangssteuerung auszuüben, für die UE ausgewählt werden kann.

13. Kommunikationssystem nach Anspruch 12, wobei das Zugangsnetzwerk ferner konfiguriert ist zum Senden einer Verbindungsanforderung zu dem ersten Kernnetzwerk, nachdem die UE die durch das Zugangsnetzwerk ausgeübte Zugangssteuerung durchläuft.

14. Kommunikationssystem nach Anspruch 13,
wobei das erste Kernnetzwerk konfiguriert ist zum Einstellen einer Zugangsregelung für die UE, die von durch das Kernnetzwerk ausgeübter Zugangssteuerung abhängig ist, und Beurteilen, gemäß der Zugangsregelung, ob eine Zugangsanforderung Informationen trägt, die nicht lokal identifiziert werden können, wenn die durch das Zugangsnetzwerk gesendete Verbindungsanforderung empfangen wird, und wenn die Zugangsanforderung Informationen trägt, die nicht identifiziert werden können, Zurückmelden einer Zugangsfehlschlag-Nachricht an das Zugangsnetzwerk;
wobei die Verbindungsanforderung die Informationen, die durch das Kernnetzwerk nicht identifiziert werden können, nicht trägt.

## Revendications

1. Procédé de contrôle de l'accès d'un Equipement Utilisateur, UE (User Equipment), comprenant :
la détermination, par un réseau d'accès, d'un mode de contrôle d'accès pour un UE, qui dépend d'un contrôle d'accès mis en oeuvre par un réseau central ; et **caractérisé par** :
la mise en oeuvre, par le réseau d'accès, d'un contrôle d'accès sur l'UE lorsque le réseau central est incapable de mettre en oeuvre un contrôle d'accès sur l'UE dans le mode de contrôle d'accès.

2. Procédé selon la revendication 1, dans lequel :
le mode de contrôle d'accès pour l'UE est un mode de Liste de Groupes d'Abonnés Fermés Autorisée, ou Liste CSG (Closed Subscriber Group) Autorisée ;
la mise en oeuvre d'un contrôle d'accès sur l'UE lorsque le réseau central est incapable de mettre en oeuvre un contrôle d'accès sur l'UE dans le mode de contrôle d'accès comprend :
la mise en oeuvre, par le réseau d'accès, d'un contrôle d'accès sur l'UE dans un mode de Liste d'Identifiants d'Abonnés Mobiles Internationaux Autorisée, ou Liste IMSI (International Mobile Subscriber Identifier) Autorisée, lorsque le réseau d'accès détermine que le réseau central est incapable de mettre en oeuvre un contrôle d'accès sur l'UE dans le mode de Liste CSG autorisée.

3. Procédé selon la revendication 2, dans lequel :
des informations de réseau central sont configurées sur une passerelle du réseau d'accès, ou sont configurées sur une station de base du réseau d'accès ; les informations de réseau central comprennent des informations indiquant si un contrôle d'accès peut être mis en oeuvre sur l'UE qui dépend du contrôle d'accès mis en oeuvre par le réseau central ;
la détermination du fait que le réseau central est incapable de mettre en oeuvre un contrôle d'accès sur l'UE dans le mode de Liste CSG Autorisée comprend :
la détermination, par la passerelle du réseau d'accès, du fait que le réseau central est incapable de mettre en oeuvre un contrôle d'accès sur l'UE dans le mode de Liste CSG Autorisée conformément aux informations de réseau central configurées sur la passerelle ;
ou comprend :
la détermination, par la station de base du réseau d'accès, du fait que le réseau central est incapable de mettre en oeuvre un contrôle d'accès sur l'UE dans le mode de Liste CSG Autorisée conformément aux informations de réseau central configurées sur la station de base.

4. Procédé selon la revendication 1, dans lequel :
la détermination du fait que le réseau central est incapable de mettre en oeuvre un contrôle d'accès sur l'UE dans le mode de contrôle d'accès comprend :
l'envoi, par une passerelle du réseau d'accès, d'une demande de connexion au réseau central, la demande de connexion acheminant un ID CSG d'une cellule à laquelle accède l'UE ;
la réception d'un message d'échec de l'accès en provenance du réseau central ;
la détermination du fait que le réseau central est incapable de mettre en oeuvre un contrôle d'accès sur l'UE dans le mode de contrôle d'accès conformément au message d'échec de l'accès.

5. Procédé selon l'une quelconque des revendications 1 à 4, dans lequel :
la détermination, par un réseau d'accès, d'un mode de contrôle d'accès pour l'UE comprend :
la réception, par une passerelle du réseau d'accès, d'une demande d'enregistrement, la demande d'enregistrement étant envoyée par une station de base après que la station de base a reçu une demande d'accès en provenance de l'UE ; et
l'apprentissage, par la passerelle, conformément à la demande d'enregistrement, du fait que l'UE dépend du contrôle d'accès mis en oeuvre par le réseau central, et la détermination d'un mode de contrôle d'accès pour l'UE ;
ou comprenant :
la réception, par une station de base, d'une demande d'accès en provenance de l'UE ; et
l'apprentissage, par la station de base, du fait que l'UE dépend d'un contrôle d'accès mis en oeuvre par le réseau central, et la détermination d'un mode de contrôle d'accès pour l'UE, conformément à la demande d'accès provenant de l'UE.

6. Procédé selon la revendication 1, dans lequel :
la mise en oeuvre d'un contrôle d'accès sur l'UE comprend :
la mise en oeuvre, par le réseau d'accès, d'un contrôle d'accès sur l'UE conformément à un identifiant d'Abonné Mobile International de l'UE.

7. Procédé selon la revendication 1, comprenant :
la mise en oeuvre, par une passerelle du réseau d'accès, d'un contrôle d'accès sur l'UE ; et
après la mise en oeuvre, par une passerelle du réseau d'accès, d'un contrôle d'accès sur l'UE, le procédé comprenant en outre :
l'envoi, par la passerelle, d'un message à une station de base du réseau d'accès, le message comprenant une indication d'un mode de mise en oeuvre d'un contrôle d'accès sur l'UE, lorsque la passerelle met en oeuvre sans succès le contrôle d'accès sur l'UE.

8. Procédé selon la revendication 7, dans lequel, après l'envoi du message à la station de base du réseau d'accès, le procédé comprend en outre :
la réception, par la passerelle, d'une demande d'enregistrement renvoyée par la station de base, la demande d'enregistrement acheminant un Identifiant d'Abonné Mobile International de l'UE et étant envoyé après que la station de base a mis en oeuvre un contrôle d'accès avec succès ou que la station de base n'a pas mis en oeuvre de contrôle d'accès ;
l'obtention, par la passerelle, de l'Identifiant d'Abonné Mobile International ; et
la mise en oeuvre, par la passerelle, d'un contrôle d'accès sur l'UE conformément à l'Identifiant d'Abonné Mobile International.

9. Entité de contrôle d'accès, comprenant :
un premier module de réception (31), configuré pour recevoir une demande d'accès en provenance d'un Equipement Utilisateur, UE, qui dépend d'un contrôle d'accès mis en oeuvre par un réseau central, et **caractérisé par** :
un premier module d'évaluation (32), configuré pour évaluer si un réseau central quelconque capable de mettre en oeuvre un contrôle d'accès peut être sélectionné pour l'UE ; et
un premier module de contrôle d'accès (33), configuré pour mettre en oeuvre un contrôle d'accès sur l'UE si le premier module d'évaluation (32) détermine qu'aucun réseau central capable de mettre en oeuvre un contrôle d'accès ne peut être sélectionné pour l'UE.

10. Entité de contrôle d'accès selon la revendication 9, comprenant en outre :
un premier module de configuration (34), configuré pour configurer des informations de réseau central en tant que base permettant au premier module d'évaluation (32) d'évaluer si un réseau central quelconque capable de mettre en oeuvre un contrôle d'accès peut être sélectionné pour l'UE.

11. Entité de contrôle d'accès selon la revendication 9 ou 10, dans lequel le premier module d'évaluation (32) comprend en outre :
une première unité de sélection (321), configurée pour :
sélectionner un réseau central qui ne nécessite pas de contrôle d'accès pour l'UE si le premier module d'évaluation (32) détermine qu'aucun réseau central capable de mettre en oeuvre un contrôle d'accès ne peut être sélectionné pour l'UE, et pour envoyer une demande de connexion au réseau central, la demande de connexion acheminant des informations ne pouvant pas être identifiées par le réseau central ; et
une première unité de rétroaction (322), configurée pour recevoir un message d'échec de l'accès renvoyé par le réseau central sélectionné par la première unité de sélection (321), et pour ordonner au premier module de contrôle d'accès (33) de mettre en oeuvre un contrôle d'accès sur l'UE.

12. Système de communication, comprenant un équipement utilisateur, UE, un réseau d'accès et un premier réseau central, **caractérisé par :**
**le fait que** le réseau d'accès est configuré pour recevoir une demande d'accès en provenance de l'UE, celle-ci dépendant du contrôle d'accès mis en oeuvre par un réseau central, et pour mettre en oeuvre un contrôle d'accès sur l'UE si aucun réseau central capable de mettre en oeuvre un contrôle d'accès ne peut être sélectionné pour l'UE.

13. Système de communication selon la revendication 12, dans lequel le réseau d'accès est en outre configuré pour envoyer une demande de connexion au premier réseau central après que l'UE a été accepté lors du contrôle d'accès mis en oeuvre par le réseau d'accès.

14. Système de communication selon la revendication 13,
le premier réseau central étant configuré pour définir une politique d'accès pour l'UE, celle-ci dépendant du contrôle d'accès mis en oeuvre par le réseau central, et pour évaluer, conformément à la politique d'accès, si une demande d'accès achemine des informations ne pouvant pas être identifiées localement lors de la réception de la demande de connexion envoyée par le réseau d'accès et, si la demande d'accès achemine des informations ne pouvant pas être identifiées, pour renvoyer un message d'échec de l'accès au réseau d'accès ;
dans lequel la demande de connexion n'achemine pas les informations ne pouvant pas être identifiées par le réseau central.
